(19) Europäisches Patentamt
European Patent Office
Office européen des brevets

(11) **EP 1 017 186 B1**

(12) **FASCICULE DE BREVET EUROPEEN**

(45) Date de publication et mention
de la délivrance du brevet:
**30.07.2008 Bulletin 2008/31**

(51) Int Cl.:
***H04B 7/005*** *(2006.01)*

(21) Numéro de dépôt: **99403211.8**

(22) Date de dépôt: **20.12.1999**

(54) **Procédé de contrôle de la puissance d'un émetteur sur base de signaux reçus, et récepteur associé audit procédé**

Verfahren zur Sendeleistungsregelung mittels empfangener Signale, und Empfänger damit

Method for controlling transmitter power based on received signals, and receiver associated to said method

(84) Etats contractants désignés:
**AT BE CH CY DE DK ES FI FR GB GR IE IT LI LU MC NL PT SE**

(30) Priorité: **30.12.1998 FR 9816623**

(43) Date de publication de la demande:
**05.07.2000 Bulletin 2000/27**

(73) Titulaire: **Alcatel Lucent**
**75008 Paris (FR)**

(72) Inventeurs:
• **Calot, Guillaume**
**78000 Versailles (FR)**

• **Lapaille, Cédric**
**78400 Chatou (FR)**

(74) Mandataire: **Hedarchet, Stéphane et al**
**Alcatel Lucent**
**Intellectual Property & Standards**
**54 rue La Boétie**
**75008 Paris (FR)**

(56) Documents cités:
**WO-A-97/49197     WO-A-98/23044**
**WO-A-98/45962     US-A- 5 305 468**
**US-A- 5 852 782**

**Description**

L'invention est relative à un procédé pour contrôler la puissance d'un émetteur de façon telle que le signal reçu par un récepteur présente une qualité sensiblement constante.

De façon générale, l'invention se rapporte à un système de télécommunications dans lequel le canal de propagation des signaux de l'émetteur vers le récepteur présente un gain variable.

Elle concerne plus particulièrement, mais non exclusivement, un système de télécommunications, notamment par satellites, dans lequel les conditions de propagation des signaux entre l'émetteur et le récepteur peuvent varier, par exemple du fait de variation des conditions météorologiques.

Dans un tel système, les variations de gain du canal de transmission ont pour origines principales la pluie, la scintillation et les masquages et ces variations provoquent, par rapport à une transmission dans de bonnes conditions, une forte atténuation du signal reçu. La scintillation a pour origine des trajets multiples des signaux qui provoquent des combinaisons additives et soustractives. Les masquages interviennent quand une antenne suit une source mobile, telle qu'un satellite, et que des obstacles viennent s'interposer sur le trajet du signal transmis.

En outre, le bruit du signal reçu peut varier soit du fait d'une variation des conditions de propagation soit du fait que la source de bruits (qu'elle vienne de l'émetteur ou d'un parasite extérieur) est variable.

Un système de télécommunications doit assurer une qualité de service minimale. Par exemple, dans le cas d'une transmission de signaux numériques, cette condition requiert que le taux d'erreurs binaires soit toujours inférieur à un taux requis. Pour satisfaire à cette exigence, on s'assure qu'à tout instant le rapport signal à bruit du signal reçu soit supérieur à une valeur prédéterminée.

Pour résoudre ce problème, la solution la plus courante est de conférer à la puissance d'émission une valeur suffisante pour que, quelles que soient les conditions de la liaison entre émetteur et récepteur, on obtienne toujours un rapport signal à bruit au moins égal à une valeur minimale. Mais, cette solution n'est, en général, pas satisfaisante, car elle conduit à fournir une puissance excessive à l'émetteur, ce qui peut entraîner une limitation de la capacité de transmission d'un système dont fait partie l'émetteur. En effet, quand la transmission s'effectue par l'intermédiaire d'un satellite qui relaie les émissions provenant de plusieurs émetteurs, la puissance disponible dans le satellite est limitée, et une puissance élevée fournie à un émetteur diminue la puissance disponible pour les autres émetteurs. En d'autres termes, le nombre d'émetteurs qui peuvent être relayés par le satellite est donc réduit. La puissance d'émission est donc excessive.

Une autre solution au problème des variations de puissance transmise et des variations de bruit consiste à effectuer une régulation. Le contrôle de la puissance de l'émetteur est réalisé par le récepteur. A cet effet, on détermine le rapport signal à bruit du signal reçu, on compare ce rapport à une valeur de référence, et, à partir du résultat de la comparaison, on élabore un signal de consigne qui est transmis du récepteur vers l'émetteur. Ce signal de consigne a pour but de corriger la puissance de l'émetteur afin que le signal émis fournisse au récepteur, après propagation dans le canal de transmission, un signal dont le rapport signal à bruit soit égal à la référence.

Pour comparer, dans le récepteur, le rapport signal à bruit à la référence, en général, avant la comparaison, on prévoit un lissage tel qu'un filtrage passe-bas, de la mesure du rapport signal à bruit afin de limiter le bruit provenant du canal de transmission.

On a constaté que la mise en oeuvre d'une telle régulation pose des problèmes difficiles à résoudre dans le cas où il existe un retard non négligeable de transmission et/ou de traitement des signaux de l'émetteur vers le récepteur et du récepteur vers l'émetteur. En effet, le signal de consigne que reçoit l'émetteur est destiné à corriger une situation qui a pu évoluer entre l'émission de la consigne par le récepteur et sa réception par l'émetteur et cette situation peut encore évoluer entre l'émission d'un signal de données (appliquant la consigne de puissance) par l'émetteur et sa réception par le récepteur. Ce décalage entre l'instant de la correction demandée et l'instant où elle est reçue par l'émetteur entraîne une impossibilité de réguler la puissance quand le gain du canal de transmission - c'est-à-dire les conditions de propagation dans l'exemple - varie de façon sensible pendant le temps de transmission.

Le document WO/9845962 concerne une méthode de contrôle du niveau de puissance de transmission d'un terminal dans un système de communication par satellites.

Ce problème de décalage est encore aggravé dans le cas d'un système de télécommunications à trafic sporadique (c'est-à-dire à débit variable) et/ou dans le cas où les consignes sont transmises, du récepteur vers l'émetteur, seulement avec des informations proprement dites à transmettre.

On considérera ici, à titre d'exemple, un système de transmission asynchrone tel qu'un système ATM ("Asynchronous Transfer Mode") dans lequel le récepteur constitue, de son côté, un émetteur qui transmet des données à l'émetteur fonctionnant alors comme récepteur. Dans ce cas, les consignes ne sont transmises qu'avec des cellules ou paquets de données (d'information ou de signalisation) transmises du récepteur vers l'émetteur. Comme le trafic est sporadique, le temps qui s'est écoulé entre, d'une part, l'instant d'application de la consigne de puissance à l'émetteur, et, d'autre part, l'instant de l'événement ayant servi à élaborer cette consigne dans le récepteur, est variable et peut atteindre des valeurs importantes. De même, la sporadicité du trafic entre l'émetteur et le récepteur entraîne une durée variable entre l'instant d'émission et la réception dans le récepteur.

En particulier, dans un système de transmission de type dit "multimédia", le trafic des données présente des débits très variables. Par exemple, la transmission de courrier électronique exige un débit beaucoup plus faible que la transmission de données vidéo.

L'invention se rapporte à une régulation de la puissance de l'émetteur et fournit des solutions particulièrement simples aux problèmes mentionnés ci-dessus.

Le procédé selon l'invention est caractérisé en ce qu'à chaque fois que le récepteur reçoit une information provenant de l'émetteur, il détermine une consigne de puissance demandée à l'émetteur en fonction, d'une part, de la comparaison d'une caractéristique du signal reçu avec une référence, d'autre part, de la puissance à laquelle a été émise l'information reçue, et d'autre part, enfin, des consignes précédemment émises mais non prises en compte dans l'information reçue en raison des retards de transmission.

La puissance de l'émetteur est nécessairement connue par le récepteur, puisque c'est ce dernier qui la détermine par les consignes.

Quand la consigne de puissance émise sera prise en compte par l'émetteur, la puissance demandée tiendra compte des consignes reçues précédemment. Ainsi, l'asservissement peut fonctionner sans instabilité.

La difficulté pouvant résulter de la sporadicité du trafic du récepteur vers l'émetteur est résolue par le fait que l'instant d'émission des consignes étant connu dans le récepteur, ce dernier peut en tenir compte pour élaborer les consignes suivantes.

La sporadicité du trafic de l'émetteur vers le récepteur est aussi sans conséquence néfaste, car la puissance de l'émetteur étant déterminée par le récepteur, ce dernier connaît à tout instant la puissance d'émission du signal qu'il reçoit.

Ce procédé permet ainsi de s'affranchir des instabilités ou dysfonctionnements qui pourraient résulter des retards de transmission et de traitement.

Dans une réalisation, on garde en mémoire le signal représentant la puissance de l'émetteur pendant une durée t' égale à la somme du temps $t_p$ de propagation du récepteur vers l'émetteur, du temps $t_e$ de traitement ou prise en compte de la consigne par l'émetteur, et du temps $t_p$ de propagation de l'émetteur vers le récepteur. Ce temps t' est connu et, en général, constant. La mise à jour du signal représentant la puissance s'effectue alors à chaque émission de consigne du récepteur vers l'émetteur. Si la consigne précédemment élaborée n'a pas été transmise vers l'émetteur alors qu'une nouvelle information est reçue par le récepteur, la nouvelle consigne, élaborée à partir de la nouvelle information reçue, remplace la consigne qui n'a pas été émise.

Dans un mode de réalisation préféré, la caractéristique du signal reçu est déterminée de la façon suivante : on mesure le rapport signal à bruit instantané de ce signal reçu, on divise ce rapport signal à bruit par la puissance d'émission du signal reçu, on lisse (par exemple, on soumet à un filtrage passe-bas) le résultat de la division et on multiplie ce signal de division lissé par la puissance d'émission du signal reçu.

Le lissage permet, de façon en soi connue, de diminuer le bruit d'un signal. En effet, il permet de réduire, de façon sensible, le bruit qui s'étale sur tout le spectre, le filtrage ne retenant que la partie basse du spectre de l'énergie.

Le lissage qui s'effectue sur la division du rapport signal à bruit par ladite puissance d'émission du signal reçu permet d'améliorer sensiblement la qualité de la régulation. En effet, le numérateur du rapport signal à bruit instantané qui est mesuré est le produit du signal émis par l'atténuation (ou le gain) du canal de transmission (la propagation hertzienne dans l'exemple) et si le lissage était effectué sur ce produit, il provoquerait une intégration des variations de la puissance, ce qui entraînerait des oscillations de ce rapport signal à bruit lissé lors de changements brusques du gain du canal de transmission. Ces oscillations du signal mesuré fourniraient alors des valeurs insuffisantes du rapport signal à bruit mesuré par rapport à sa valeur réelle, ce qui aurait pour conséquence une consigne excessive.

Ainsi, lorsqu'on divise le rapport signal à bruit du signal reçu par la puissance d'émission, on s'affranchit, dans une grande mesure, de ces oscillations, ce qui permet de conférer une plus grande précision à la mesure de la caractéristique du signal reçu et, donc, de conférer à la puissance d'émission une valeur qui n'est pas excessive.

Il est à noter que cette disposition peut s'utiliser indépendamment de la disposition consistant à élaborer la consigne à partir d'une mémorisation des consignes précédemment élaborées.

En d'autres termes, l'invention consiste à utiliser la puissance d'émission du signal reçu pour élaborer la consigne de puissance de l'émetteur. Le signal représentant la puissance d'émission du signal reçu peut être utilisé avec les consignes précédemment élaborées pour déterminer la nouvelle consigne ; ce signal représentant la puissance d'émission du signal reçu peut, indépendamment ou en combinaison, être utilisé pour limiter lesdites oscillations du rapport signal à bruit mesuré. En particulier, pour élaborer la consigne, il n'est pas toujours indispensable de faire appel aux consignes précédemment élaborées ; il en est en particulier ainsi quand, par exemple, le temps de propagation est relativement faible, ou quand les consignes sont émises du récepteur vers l'émetteur à une fréquence relativement faible, ou encore quand chaque cellule contient une information sur la puissance avec laquelle elle a été émise.

Dans un système de télécommunication pour lequel des informations sont transmises depuis le récepteur vers l'émetteur, les consignes étant transmises avec ces informations, il est préférable de prévoir un système de régulation analogue de la puissance d'émission du récepteur vers l'émetteur. Dans ce cas, c'est au niveau de l'émetteur que sera contrôlée la puissance d'émission du récepteur. Autrement dit, dans cette situation, le récepteur et l'émetteur ont chacun une double fonction d'émission et de réception.

L'invention prévoit un procédé de télécommunication selon la revendication 1.

Selon un mode de réalisation, on élabore également la consigne à partir des consignes précédemment élaborées et transmises à l'émetteur mais dont ce dernier n'a pu tenir compte en raison des retards de transmission.

Selon un mode de réalisation, la caractéristique étant un rapport signal à bruit lissé, dans le récepteur, on détermine le rapport signal à bruit instantané du signal reçu, on le divise par un signal représentant la puissance d'émission du signal reçu, on lisse ce rapport et on multiplie le rapport lissé par le signal représentant la puissance d'émission du signal reçu, le résultat de cette multiplication constituant la caractéristique qui est comparée à la référence.

Selon un mode de réalisation, la mise à jour au temps t, dans le récepteur, du signal représentant la puissance d'émission du signal reçu s'effectue après l'écoulement d'un temps t' suivant l'émission d'une consigne du récepteur vers l'émetteur, ce temps t' étant égal à la somme du retard $t_p$ de transmission du récepteur vers l'émetteur, du temps $t_e$ de traitement, ou prise en compte, de la consigne dans l'émetteur et du temps $t_p$ de retard de transmission de l'émetteur vers le récepteur, et cette mise à jour consiste à multiplier la puissance précédemment en mémoire par la consigne émise au temps t.

Selon un mode de réalisation, la consigne C(t) est élaborée à partir de la formule suivante :

$$C(t) \; = \; \frac{\gamma_{ref}}{\hat{\gamma}(t)} \quad \frac{T_x(t)}{T_x(t + t')}$$

formule dans laquelle $\gamma_{ref}$ est la valeur de la caractéristique de référence, $\hat{\gamma}(t)$ est la valeur de la caractéristique mesurée au temps t dans le récepteur, et $T_x(t)$ et $T_x(t+t')$ sont les signaux représentant la puissance d'émission du signal reçu aux temps, respectivement, t et t+t'.

Selon un mode de réalisation, la consigne C(t) est élaborée à partir de la formule suivante :

$$C(t) \; = \; \frac{\gamma_{ref}}{\hat{\gamma}(t)} \quad \frac{1}{\Pi C} \; .$$

formule dans laquelle $\gamma_{ref}$ est la valeur de la caractéristique de référence, $\hat{\gamma}(t)$ est la valeur de la caractéristique mesurée au temps t dans le récepteur, et $\Pi C$ est la consigne ou le produit des consignes précédemment émise(s) mais non encore prise(s) en compte par l'émetteur.

Selon un mode de réalisation, la consigne émise par le récepteur vers l'émetteur est émise simultanément avec des données d'information ou de signalisation.

Selon un mode de réalisation, les données transmises du récepteur vers l'émetteur se présentent sous forme de données numériques en cellules ou paquets, chaque consigne étant émise dans l'en-tête de la cellule ou du paquet.

Selon un mode de réalisation, les informations transmises de l'émetteur vers le récepteur étant des données numériques transmises par cellules ou paquets, la caractéristique du signal reçu est déterminée à chaque cellule.

Selon un mode de réalisation, le trafic d'informations de l'émetteur vers le récepteur ou du récepteur vers l'émetteur est de type sporadique.

Selon un mode de réalisation, l'émetteur ayant aussi pour but de recevoir des informations provenant du récepteur et le récepteur ayant pour but d'émettre des informations vers l'émetteur, le contrôle de la puissance d'émission du récepteur s'effectue à partir d'un signal de consigne fourni par l'émetteur.

La présente invention prévoit en outre un récepteur selon la revendication 11.

Selon un mode de réalisation, le récepteur comporte une mémoire circulaire de profondeur t', t' étant la somme du retard $t_p$ de transmission du récepteur vers l'émetteur, du temps $t_e$ de traitement pris en compte dans l'émetteur et du temps $t_p$ de retard de transmission de l'émetteur vers le récepteur.

La présente invention prévoit enfin une application du procédé de télécommunication selon l'invention à un système de télécommunication par satellite(s) dans lequel on prévoit une station de commande et une pluralité de terminaux, les communications entre le terminal et la station de commande s'effectuant par l'intermédiaire du satellite.

D'autres caractéristiques et avantages de l'invention apparaîtront avec la description de certains de ses modes de réalisation, celle-ci étant effectuée en se référant aux dessins ci-annexés, sur lesquels :

la figure 1 est un schéma d'un système de télécommunication par satellite,

la figure 2 est un schéma de moyens connus pour la régulation de la puissance d'émission à partir d'un récepteur,

la figure 3 est un diagramme expliquant les défauts du système de la figure 2,

la figure 4 est un schéma montrant un système de régulation conforme à l'invention, et

les figures 5 et 6 sont des diagrammes expliquant certains aspects du fonctionnement du système de la figure 4.

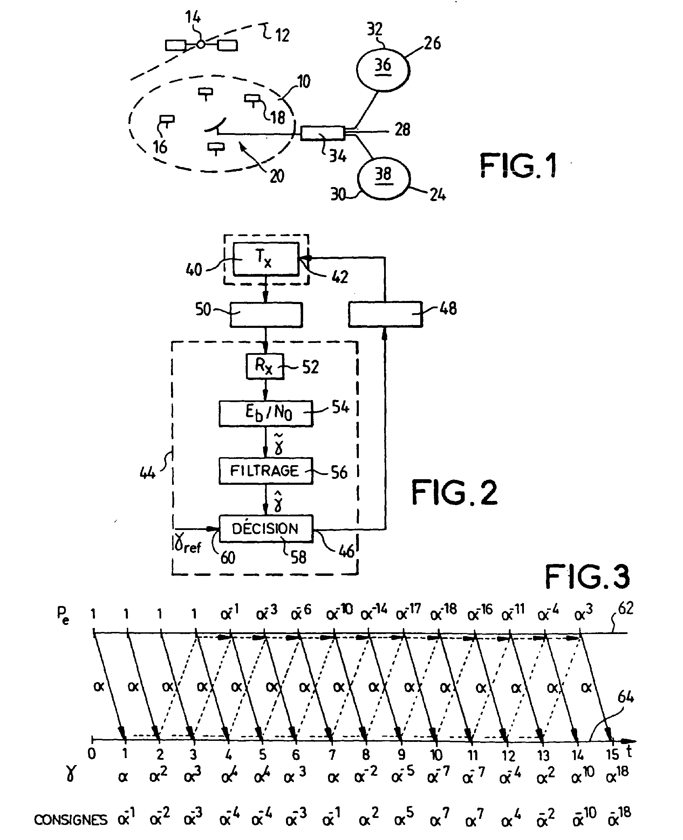

L'exemple que l'on va décrire en relation avec les figures se rapporte à un système de télécommunication dans lequel la surface du globe terrestre est divisée en zones 10 (figure 1) dont une seule a été représentée sur la figure. Dans chaque zone on trouve, d'une part, une station centrale de commande ou de connexion 20, et, d'autre part, des terminaux ou postes d'abonnés 16, 18, etc.

Les terminaux 16, 18, etc. communiquent entre eux par l'intermédiaire d'un satellite 14 à orbite basse ou moyenne. Dans l'exemple, l'altitude du satellite est d'environ 1 500 km. Ce satellite 14 se déplace sur une orbite 12 sur laquelle se trouvent d'autres satellites. Pour couvrir le globe terrestre, ou une grande partie de ce dernier, on prévoit plusieurs orbites 12.

Quand le satellite 14 perd de vue la zone 10, le satellite suivant (non montré), par exemple sur la même orbite 12, prend le relais de la communication.

La station de commande et de connexion 20 assure la gestion des communications entre les terminaux 16, 18, etc. En particulier, elle attribue des ressources en fréquences, en puissance et en codes pour chacun des terminaux. A cet effet, cette station 20 communique avec chacun des terminaux, également par l'intermédiaire du satellite 14.

Les communications entre terminaux s'effectuent par l'intermédiaire de la station 20. Autrement dit, quand le terminal 16 communique avec le terminal 18, le terminal 16 envoie les données à la station 20 par l'intermédiaire du satellite et la station 20 réémet ces données vers le terminal 18, également par l'intermédiaire du satellite.

La station 20 est reliée à un réseau terrestre 22, du type ATM dans l'exemple. Ainsi, cette station 20 est reliée, par l'intermédiaire d'un commutateur ATM 34, à un réseau large bande 36, à un réseau à bande étroite 38, ainsi qu'à des serveurs 28. Le réseau 38 à bande étroite permet la connexion d'utilisateurs 30 et de serveurs 24. De même, le réseau 36 à large bande permet la connexion d'utilisateurs 32 et de serveurs 26.

Un tel système de télécommunication du type à transmission asynchrone permet un débit important de données avec une grande capacité et un faible retard dû à la transmission.

Dans un réseau asynchrone, notamment du type ATM, les données sont sous forme numérique et organisées en paquets ou cellules comprenant, pour la norme ATM, 384 bits (ou symboles) de données et 40 bits (ou symboles) d'en-tête.

Le problème que vise à résoudre l'invention est d'attribuer, à chaque communication, de la station de commande 20 vers un terminal 16, 18 et d'un terminal 16, 18 vers la station de commande, une ressource en puissance qui soit telle que cette puissance soit celle juste nécessaire pour que le rapport signal à bruit réponde aux spécifications. Ainsi, les communications auront une qualité de service requise garantissant un taux d'erreurs binaires inférieur à une limite prédéterminée sans consommation excessive de puissance. En effet, la puissance émise doit être celle qui est juste nécessaire, car la puissance disponible dans le satellite est limitée et, si une communication nécessite plus de puissance, cet excès vient en diminution de la puissance attribuée aux autres communications.

Par ailleurs, les terminaux étant des appareils à grande diffusion dont le prix doit être aussi bas que possible, il est préférable que leur puissance soit limitée.

Pour régler la puissance d'émission, on détermine le rapport signal à bruit à la réception et on règle la puissance d'émission pour que ce rapport signal à bruit soit égal à une valeur de référence.

Dans le cas d'un système de transmission par satellite, la puissance reçue par les récepteurs peut varier dans une grande mesure, notamment en raison des variations des conditions de propagation dues aux changements aléatoires des conditions météorologiques. En particulier, la propagation se dégrade sensiblement en cas de pluie par rapport à un temps clair. La propagation se dégrade aussi du fait des scintillations et de masquages.

Les conditions de propagation peuvent également introduire du bruit et la source de bruit peut, elle-même, présenter des caractéristiques qui varient. Outre le bruit thermique, les causes de bruit sont, notamment, les interférences dues à l'utilisation des mêmes fréquences de transmission pour des zones voisines, ou encore des brouillages par d'autres systèmes de transmission.

L'asservissement de la puissance d'émission au rapport signal à bruit à la réception pose un problème difficile à résoudre dans le cas du système de transmission par satellite(s) en raison des délais de propagation de la consigne émise par le récepteur vers l'émetteur et des délais de transmission des signaux de l'émetteur vers le récepteur.

Dans l'exemple, le retard dû à la propagation du signal d'un terminal vers la station de commande ou, réciproquement, de la station de commande vers un terminal, est de l'ordre de 25 ms. Ce délai est maintenu constant grâce à des mémoires tampons. En effet, le temps de propagation proprement dit varie constamment du fait du déplacement du satellite par rapport à la zone, ce qui entraîne une variation de la distance de propagation entre un terminal et la station de commande. Mais, afin de faciliter la gestion du système, le retard est maintenu à un niveau constant grâce aux mémoires tampons mentionnées ci-dessus.

Par ailleurs, la mesure du rapport signal à bruit étant effectuée sur des cellules reçues, la fréquence de mesure dépend du trafic qui est intrinsèquement variable dans un système de communication multimédia du type de celui décrit. Par exemple, la fréquence de transmission des cellules est moins élevée dans le cas d'une messagerie électronique que dans le cas de transmission d'images ou dans le cas de transmissions de programmes.

En outre, il est préférable que la transmission de consigne de puissance du récepteur vers l'émetteur s'effectue en même temps qu'une transmission de cellule, car, cette consigne ne nécessitant qu'un nombre limité de bits, il est préférable de ne pas utiliser une cellule entière pour la seule transmission de la consigne. Il faut donc attendre d'avoir à transmettre une information (donnée ou signalisation) du récepteur vers l'émetteur pour transmettre cette consigne. Cette sporadicité du trafic augmente encore la difficulté de la régulation car elle entraîne des retards non déterministes, c'est-à-dire non prévisibles.

Ainsi, un système classique d'asservissement, s'il est utilisé tel quel, ne peut fonctionner correctement. Un tel système est représenté sur la figure 2. On voit sur cette figure que l'émetteur 40 comporte une entrée 42 recevant une consigne d'un récepteur 44. Le temps de transmission entre la sortie de commande 46 du récepteur 44 et l'entrée de consigne 42 de l'émetteur 40 correspond à un retard symbolisé par le bloc 48. Par ailleurs, la transmission des cellules de l'émetteur 40 vers le récepteur 44 s'effectue, comme la transmission inverse, par voie hertzienne par l'intermédiaire du satellite. Cette transmission constitue un canal 50 entraînant aussi un retard. Dans le récepteur 44, les cellules sont reçues par un dispositif de réception 52 et le rapport signal à bruit

$$\tilde{\gamma} \;=\; \frac{E_b}{N_0}$$

est estimé en permanence (bloc 54) sur chaque cellule reçue.

Pour limiter le bruit introduit par le canal 50, on procède à un lissage (bloc 56), c'est-à-dire, dans l'exemple, à un filtrage passe-bas, du signal fourni par le bloc 54. Ce rapport signal à bruit lissé $\hat{\gamma}$ est comparé, dans un bloc 58, appelé "bloc de décision", à une valeur de référence $\gamma_{ref}$ appliquée sur son entrée 60. Le bloc 58 délivre, sur la sortie 46, le signal de consigne vers l'émetteur 40 afin que ce dernier ajuste sa puissance d'émission en fonction de la comparaison entre le rapport signal à bruit lissé et la valeur $\gamma_{ref}$ de référence.

Le lissage 56 introduit une contrainte sur la puissance d'émission. En effet, ce lissage constitue une intégration qui induit des oscillations de la valeur mesurée lors de variations brusques du signal d'entrée. Ces oscillations, qui ne représentent pas des oscillations réelles du rapport signal à bruit reçu, sont appliquées au bloc 58 et, ainsi au cours d'une oscillation, ce bloc 58 reçoit des valeurs $\hat{\gamma}$ qui peuvent être inférieures à la référence $\gamma_{ref}$, alors que le signal à bruit réel ne descend pas en dessous de la référence. Ainsi, en général, la puissance d'émission doit être choisie avec une valeur en excès permettant de tenir compte de ces oscillations de la mesure. Comme on le verra plus loin, l'invention, selon un de ses aspects, permet de limiter ces oscillations indésirables.

Par ailleurs, comme on va le décrire en relation avec la figure 3, les études menées dans le cadre de l'invention ont permis de constater que les retards de la boucle d'asservissement représentée sur la figure 2 empêchent un fonctionnement correct de cette boucle et ces études ont permis de comprendre pourquoi l'asservissement ne fonctionnait pas et de proposer une solution.

Pour cette étude, on a considéré un exemple simplifié dans lequel on a supposé que la puissance $P_e$ a, au démarrage de la communication, la valeur 1 et le canal 50 présente une atténuation qui augmente de façon continue avec le temps, cette atténuation augmentant d'un facteur $\alpha$ à chaque unité de temps. En d'autres termes, au bout d'une unité de temps, la puissance est atténuée d'un facteur $\alpha$, au bout de deux unités de temps la puissance reçue est atténuée du facteur $\alpha^2$ et, au bout de n unités de temps, la puissance est atténuée du facteur $\alpha^n$. En outre, dans cet exemple, le temps de propagation de l'émetteur vers le récepteur et du récepteur vers l'émetteur est de une unité de temps, la consigne est émise par le récepteur 44 une unité de temps après sa réception et, de façon analogue, la puissance d'émission est mise à jour une unité de temps après réception de la consigne par l'émetteur. Enfin, on a supposé que le bruit $N_0$ a pour valeur l'unité.

On a indiqué, sur le trait supérieur 62 (figure 3), l'évolution de la puissance $P_e$ de l'émetteur 40 en fonction du temps, les unités de temps étant marquées de 0 à 15 sur le trait horizontal inférieur 64 qui symbolise le récepteur.

Sous le trait 64, on a représenté les valeurs $\gamma$ du rapport signal à bruit mesurées à chaque unité de temps et la dernière ligne représente les consignes transmises par le récepteur vers l'émetteur.

Au temps 0, l'émetteur émet à la puissance 1. Au temps 1, le récepteur reçoit la puissance $\alpha$ (du fait de l'atténuation a par unité de temps, la transmission de l'émetteur vers le récepteur étant représentée par une flèche oblique du haut vers le bas avec indication de l'atténuation). Dans ces conditions, le récepteur émet une consigne d'augmentation tendant à compenser l'atténuation. Cette consigne est donc une demande d'augmentation dans le rapport inverse, soit $\alpha^{-1}$. Mais, cette consigne n'est prise en compte par l'émetteur qu'au temps 4 du fait des retards indiqués ci-dessus. Dans ces conditions, au temps 1, la puissance d'émission est toujours 1 et les puissances reçues (égales à γ ici) aux temps 2, 3 et 4 sont, respectivement, $\alpha^2$, $\alpha^3$ et $\alpha^4$, ce qui entraîne, à ces instants, des consignes d'émission de $\alpha^{-2}$, $\alpha^{-3}$ et $\alpha^{-4}$, respectivement. Au temps 5, le récepteur reçoit une puissance $\alpha^5 . \alpha^{-1} = \alpha^4$, d'où une consigne $\alpha^{-4}$. A ce temps 5, la puissance d'émission est $\alpha^{-3}$, ce qui entraîne une puissance de réception de $\alpha^3$ au temps 6.

Avec ce fonctionnement, on observe des instabilités manifestes de la puissance d'émission. Ainsi, on voit qu'au temps 14, la puissance d'émission est $\alpha^3$, alors qu'elle devrait être $\alpha^{-11}$ (compte tenu des retards mentionnés ci-dessus).

Ce dysfonctionnement est dû au fait que les consignes sont élaborées, à chaque fois, seulement en fonction du signal reçu, sans tenir compte des consignes antérieures qui n'ont pas encore été prises en compte par l'émetteur du fait des retards de transmission et de traitement.

On voit, en effet, sur cette figure 3, que, par exemple, la consigne envoyée au temps 6 par le récepteur a pour valeur $\alpha^{-3}$. Mais, cette consigne, qui sera exécutée au temps 9 par l'émetteur ne tient pas compte du fait que, d'une part, le signal reçu au temps 6 correspond au signal émis au temps 5 et que, d'autre part, aux temps 6, 7 et 8, l'émetteur aura changé de puissance par rapport au temps 5.

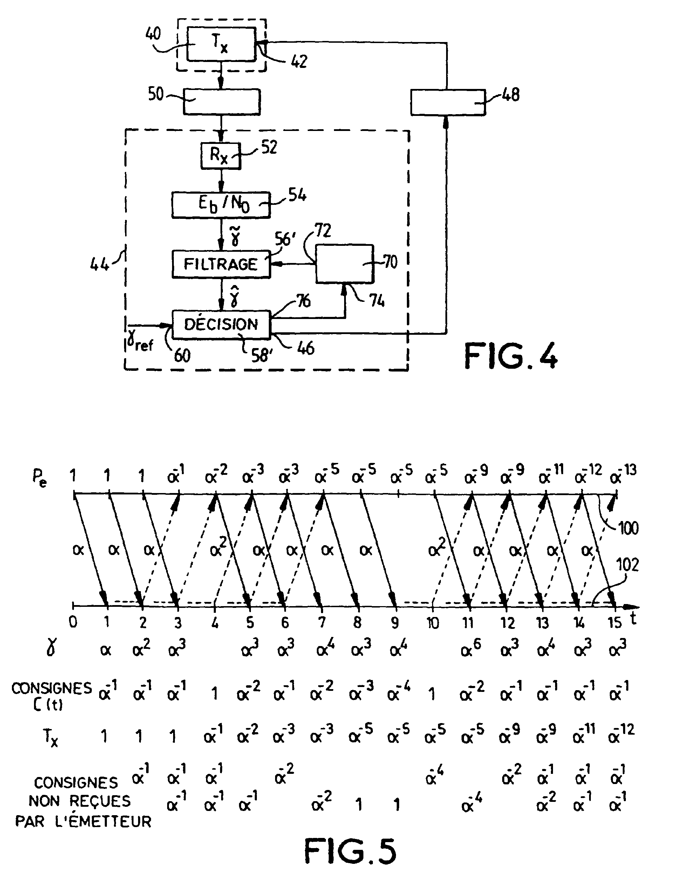

On a représenté sur la figure 4 un asservissement qui permet de résoudre les deux problèmes ci-dessus, c'est-à-dire permettant, d'une part, de limiter les oscillations du paramètre mesuré et, d'autre part, un asservissement correct, fiable et robuste de la puissance d'émission en fonction de la mesure effectuée dans le récepteur.

Sur cette figure 4, les éléments qui correspondent à ceux de la figure 3 portent les mêmes chiffres de références. Le montage représenté sur la figure 4 se distingue de celui représenté sur la figure 2 par le fait qu'on prévoit, conformément à l'invention, dans le récepteur 44, un bloc 70 commandant le bloc de filtrage 56' et le bloc 58' d'émission de consigne.

Le bloc 70 permet de déterminer, en valeur relative, la puissance à laquelle a été émise la cellule sur laquelle est effectuée l'estimation instantanée de rapport signal à bruit dans le bloc 54.

Le signal représentant la puissance avec laquelle a été émise la cellule reçue et mesurée et traitée dans les blocs 54, 56' et 58', est déterminable dans le récepteur 44 car c'est ce dernier qui détermine la puissance de l'émetteur 40.

Pour déterminer la puissance avec laquelle la cellule a été émise, on tient compte des consignes précédemment envoyées par le récepteur 44 vers l'émetteur 40.

Autrement dit, contrairement à la situation représentée sur les figures 2 et 3, la consigne envoyée par le récepteur à l'émetteur tient compte, en plus du signal reçu, de la puissance d'émission de la cellule.

En outre, la consigne de puissance demandée à un instant donné tient compte des consignes précédemment envoyées par le récepteur mais qui n'ont pas encore été prises en compte par l'émetteur. L'invention assure ainsi une stabilité de la régulation malgré les retards, inévitables, entre l'élaboration de la consigne et la prise en compte de celle-ci par l'émetteur.

Le bloc 70 (figure 4) présente une sortie 72 reliée à l'entrée du bloc 56' et délivre à ce dernier une information représentant la valeur de la puissance $T_x$ à laquelle a été émise la cellule qui doit être filtrée dans le bloc 56'.

Dans ce bloc 56', préalablement au filtrage, on divise le signal

$$\tilde{\gamma} \ = \ \frac{E_b}{N_0}$$

délivré par le bloc 54, par cette valeur $T_x$ de puissance d'émission.

Étant donné que $E_b = G T_x$, le signal filtré par le bloc 56' est le signal $G/N_0$, G étant le gain (ou atténuation) du canal 50, c'est-à-dire qu'il correspond seulement au rapport signal à bruit de l'atténuation du canal de transmission. Cette disposition permet d'amortir les oscillations du signal filtré lors des changements de pente du gain G. De cette manière, la puissance du signal d'émission peut être réduite par rapport au cas où de telles oscillations se produisent.

Le bloc 56' multiplie enfin le signal $G/N_0$ ainsi lissé, de nouveau, par la valeur $T_x$ de la puissance d'émission, afin de pouvoir comparer ce signal à la référence $\gamma_{ref}$ dans le bloc 58'.

Le bloc 70 comporte, en outre, une entrée/sortie 74 reliée à une entrée/sortie 76 du bloc de décision 58'. Ce dernier élabore les consignes de puissance à émettre sur la sortie 46 et il fournit sur l'entrée 74 du bloc 70 une information sur le moment de l'émission de la consigne, c'est-à-dire sur le moment où la sortie 46 transmet la consigne vers l'émetteur.

Pour élaborer la consigne, le bloc 58' tient compte de toutes les consignes précédemment émises et qui ne sont pas prises en compte, du fait des délais de propagation et de traitement, par la cellule reçue. De façon plus précise, la cellule reçue, et qui est traitée dans les blocs 54, 56' et 58', tient compte des consignes émises jusqu'au temps t-t' et non des consignes émises entre les instants t-t' et t. t est l'instant présent et t' est la somme de la durée $t_p$ de propagation des signaux du récepteur 44 vers l'émetteur 40, du temps $t_e$ de traitement des signaux dans l'émetteur 40 et, enfin, de la durée $t_p$ de propagation de l'émetteur 40 vers le récepteur 44.

Le temps t' a une valeur constante car, d'une part, comme on l'a vu précédemment, on confère, grâce à des mémoires tampons, une valeur constante à la durée de propagation $t_p$ et, d'autre part, le temps $t_e$ de traitement dans

l'émetteur 40 est également constant.

Même si l'on ne prévoit pas de mémoire tampon pour imposer une durée constante de transmission entre l'émission par le récepteur (ou l'émetteur) et la réception par l'émetteur (ou le récepteur), la durée $t_p$ est connue à chaque instant, puisque les distances séparant l'émetteur et le récepteur du satellite sont également connues à chaque instant.

Pour connaître, à un instant t, la puissance à laquelle a été émise une cellule reçue, il suffit de connaître la consigne demandée (par le signal sur la sortie 46) à l'instant t-t'.

Dans l'exemple, le signal émis sur la sortie 46 est un facteur multiplicatif. Par exemple, si, à l'instant t, la puissance de l'émetteur est $P_0$, la consigne sera un nombre $C_1$ tel que la cellule reçue à l'instant t+t' ait la puissance $P_0C_1$. Cet exemple ne vaut que, si entre les instants t-t' et t, aucune autre consigne n'a été émise. Si dans cet intervalle, d'autres consignes avaient été émises, par exemple $C_2$ et $C_3$, la consigne émise sera toujours $C_1$, mais, dans ce cas, la puissance d'émission de la cellule reçue à l'instant t+t' sera $P = P_0C_1C_2C_3$.

On voit ainsi qu'on peut connaître à tout instant la puissance d'émission de chaque cellule reçue à condition de connaître le produit des consignes émises jusqu'à l'instant t-t'. Il n'est pas indispensable de connaître la puissance d'émission de l'émetteur à l'initialisation ; il suffit de connaître l'évolution de cette puissance, c'est-à-dire l'évolution des consignes.

Dans le mode de réalisation décrit, pour limiter la taille de la mémoire du bloc 70, on garde seulement en mémoire les puissances demandées entre les instants t-t' et t qui correspondent aux puissances d'émission des cellules reçues entre les instants t et t+t'.

Dans l'exemple, les consignes sont émises seulement lorsqu'une communication (d'information ou de signalisation) est établie du récepteur 44 vers l'émetteur 40. Par "communication", on entend tout type de transmission d'informations, ce qui englobe non seulement la transmission de données proprement dites, mais aussi la transmission de données de signalisation telles que les données indiquant un changement de satellite, la position du satellite ou des données de vérification.

Dans cette situation, la consigne est émise dans l'en-tête d'une des cellules de la communication. Ainsi, la transmission de la consigne n'est pas obligatoirement immédiate. Il peut donc se produire qu'une cellule soit reçue par le récepteur 44, alors que la consigne correspondant à la cellule précédemment analysée n'a pas été émise vers l'émetteur 40 (car, entre temps, il n'y a pas eu de trafic du récepteur vers l'émetteur). Dans cette situation, la nouvelle consigne, qui est élaborée à partir de la dernière cellule reçue, remplace la consigne précédente.

Compte tenu de l'ensemble des explications fournies ci-dessus, la consigne C(t) construite par le bloc 58' après chaque réception de cellule a pour valeur :

$$(1) \qquad C(t) \ = \ \frac{\gamma_{ref}}{\hat{\gamma}(t)} \quad \frac{T_x(t)}{T_x(t \ + \ t')} \ = \ \frac{\gamma_{ref}}{\hat{\gamma}(t)} \quad \frac{1}{\Pi C}$$

Dans cette formule, C(t) est la consigne, c'est-à-dire un facteur de multiplication, $\gamma_{ref}$ est la valeur de référence appliquée sur l'entrée 60 du bloc 58', $\hat{\gamma}(t)$ est le signal de sortie du bloc de filtrage 56' appliqué sur une entrée du bloc 58', $T_x(t)$ est l'image à l'instant t, dans le bloc 70, de la puissance de l'émetteur à l'instant $t-t_p$ et $T_x(t+t')$ est l'image à l'instant t+t' de la puissance de l'émetteur à l'instant $t+t'-t_p$. Cette dernière image est connue à l'instant t puisqu'elle dépend des consignes émises par le récepteur jusqu'à cet instant.

On comprend que le rapport $\dfrac{T_x(t)}{T_x(t+t')}$ correspond à l'inverse du produit des consignes de puissance émises par le récepteur et dont l'émetteur n'a pas encore tenu compte. Il est, en effet, nécessaire de ne pas tenir compte plusieurs fois de ces consignes précédemment élaborées. $\Pi C$ est ce produit dans la formule (1) ci-dessus.

Par ailleurs, la valeur $T_x$ (image de la puissance d'émission) est mise à jour dans la mémoire du bloc 70 à chaque fois qu'une consigne est émise, ce bloc 70 étant informé de cette émission par le signal sur son entrée 76. Cette mise à jour consiste, après l'écoulement d'un temps t' après l'émission de la consigne, à multiplier la valeur $T_x$ précédente par la consigne émise. Autrement dit : au temps t, la consigne est élaborée sur la base de la puissance de la cellule émise au temps $t_1 = t-t_p-t_r$ ($t_r$ est la durée de la mesure et de l'élaboration de la consigne dans le récepteur), et cette consigne émise au temps t sera exécutée par l'émetteur au temps $t_1+t'+t_r$ et ne sera reçue par le récepteur qu'à partir du temps $t_1+t'+t_p+t_r = t+t'$. Dans ces conditions, pour mettre à jour la puissance $T_x$, on procède de la façon suivante : quand une consigne est transmise au temps t, sur la sortie 46, par une cellule, on met à jour la puissance $T_x$ en mémoire du bloc 70 au temps t+t'. Cette mise à jour au temps t+t' consiste à multiplier la valeur $T_x$ en mémoire par la consigne émise au temps t.

Comme déjà indiqué, lorsqu'une nouvelle consigne est élaborée sur la base d'une cellule reçue, alors que la consigne précédente n'a pu être émise, la nouvelle consigne remplace celle qui n'a pu être émise.

Un exemple de fonctionnement est représenté sur la figure 5 qui est une figure analogue à celle de la figure 3.

Sur cette figure, on a considéré, comme dans le cas de la figure 3, un émetteur dont la puissance de départ a la valeur 1 et un canal de transmission qui s'affaiblit d'un coefficient $\alpha$ toutes les unités de temps. La durée de transmission, dans un sens ou dans l'autre, entre l'émetteur et le récepteur est de une unité de temps. La durée de traitement dans le récepteur est de une unité de temps. Par contre, par rapport à la figure 3, pour simplifier, on a supposé que la durée de traitement dans l'émetteur est négligeable. Sur le trait supérieur 100, on a représenté l'évolution de la puissance émise par l'émetteur en fonction du temps. Le trait inférieur 102 représente le récepteur. Sous ce trait, on a indiqué les variations de la valeur $\hat{\gamma}$ en fonction du temps. On a aussi indiqué l'évolution avec le temps : des consignes C(t) de puissance, de l'image $T_x$ de la puissance de l'émetteur 40 qui est formée dans le bloc 70, et, enfin, des consignes de puissance envoyées par le récepteur 44 vers l'émetteur 40, mais qui n'ont pas encore été prises en compte par l'émetteur 40.

On notera qu'à un temps t donné, l'image $T_x$ de la puissance $P_e$ est l'image de la puissance d'une cellule émise au temps $t-t_p$ (t-1 dans l'exemple).

Dans cet exemple de fonctionnement, l'émission des cellules de l'émetteur vers le récepteur (lignes obliques, du trait 100 vers le trait 102) n'est pas régulière. Ainsi, entre les instants 0 et 2, entre les instants 4 et 7 et entre les instants 10 et 14, l'émission s'effectue au rythme d'une cellule par une unité de temps, alors que, entre les instants 2 et 4, il s'écoule deux unités de temps ; il en est de même, entre les instants 8 et 10. De façon analogue, l'émission des cellules du récepteur vers l'émetteur (traits pointillés horizontaux, et traits obliques du trait 102 vers le trait 100). Il y a émission chaque unité de temps entre les temps 2 et 6, et entre les temps 10 et 14. Par contre, quatre unités de temps séparent l'émission d'une cellule entre les instants 6 et 10.

Pour cette figure 5, on a utilisé la formule (1) ci-dessus pour déterminer les consignes C(t) et on a également utilisé la mise à jour de $T_x$ qui consiste à multiplier la valeur $T_x$ présente à l'instant t par la consigne à l'instant t-t'. Dans cet exemple, le temps t' a pour valeur deux unités de temps (deux fois la durée de propagation, la durée $t_e$ de traitement étant supposée nulle).

Par exemple, au temps 7, la consigne est :

$$C(7) \;=\; \frac{1}{\alpha^4} \quad \frac{1}{\alpha^{-2}} \;=\; \alpha^{-2}.$$

Dans le calcul ci-dessus, $\dfrac{1}{\alpha^{-2}}$ est l'inverse de la consigne non encore reçue par l'émetteur qui est indiquée par la dernière ligne au temps 7.

On voit aussi qu'on peut utiliser les valeurs $T_x(t)$ et $T_x(t+t')$. Par exemple :

$$C(7) \;=\; \frac{1}{\alpha^4} \quad \frac{T_x(7)}{T_x(9)} \;=\; \frac{1}{\alpha^4} \quad \frac{\alpha^{-3}}{\alpha^{-5}} \;=\; \alpha^{2}.$$

Pour élaborer la valeur $T_x$ au temps 7, on a considéré la valeur présente dans la mémoire 70 qui est indiquée au temps 6 et on a multiplié cette valeur par la consigne présente au temps 6-t', c'est-à-dire au temps 4. Au temps 4, la consigne était de 1. Ainsi, la valeur $T_x$ reste alors $\alpha^{-3}$ au temps 7. Aux temps 9, 10 et 11 la valeur $T_x$ est maintenue constante car, aux instants 7, 8 et 9 (c'est-à-dire aux instants t-t'), aucune consigne n'a été émise par le récepteur.

On observe que, malgré la sporadicité du trafic, la puissance $P_e$ suit correctement (aux retards de propagation et de traitement près) l'évolution de l'atténuation due à la propagation, et cela malgré l'irrégularité du trafic. Cette irrégularité du trafic entraîne, bien entendu, des irrégularités de variations de la puissance d'émission, mais ces irrégularités (par exemple du temps 10 au temps 11) n'ont pas de conséquence sur la stabilité de l'asservissement.

On a aussi constaté que le procédé est robuste aux perturbations, telles que des pertes de signaux du récepteur vers l'émetteur, c'est-à-dire des perturbations telles que des signaux émis par le récepteur 40 ne sont pas reçus par l'émetteur 44.

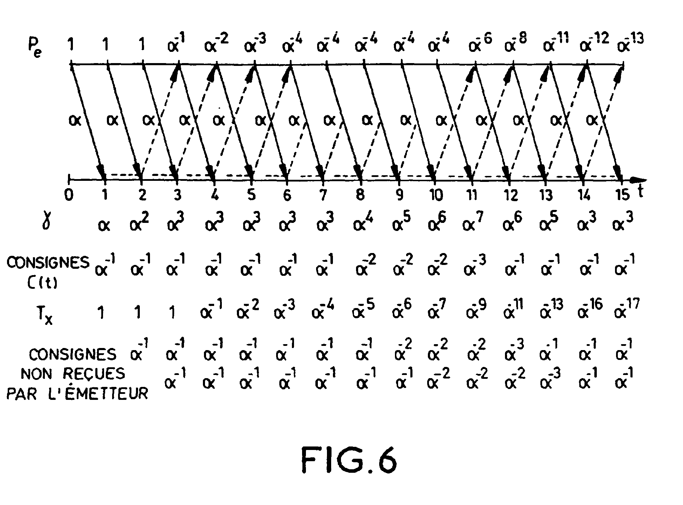

On a représenté ainsi sur la figure 6 l'effet d'une perte de cellules du récepteur vers l'émetteur. Cet exemple est analogue à celui représenté sur la figure 5. Les hypothèses sont les mêmes.

Dans cet exemple, on voit que les cellules émises par le récepteur aux temps 6, 7, 8 et 9 n'ont pas atteint l'émetteur alors que celui-ci aurait dû recevoir des consignes aux temps, respectivement 7, 8, 9 et 10.

On constate que, dans cette situation, la puissance $P_e$ retrouve la valeur correcte au temps 13, soit seulement deux unités de temps après la fin de l'interruption de la transmission du récepteur vers l'émetteur.

Un mode de réalisation du bloc 70 consiste à prévoir des moyens de mémorisation de l'image de la puissance d'émission des cellules reçues et à mettre à jour cette puissance à l'aide d'une horloge, ou compteur de temps, qui est déclenchée à l'émission d'une consigne et qui met à jour cette valeur au temps $t' = t_p + t_e + t_p$, la nouvelle valeur représentant la précédente multipliée par la consigne lors de l'émission de la consigne. Si, lors de l'arrivée d'une nouvelle cellule, la consigne précédente n'a pu être transmise, du fait qu'aucune cellule n'est transmise du récepteur vers l'émetteur, la nouvelle consigne construite à partir de la cellule reçue en dernier lieu remplace la précédente consigne.

Le bloc 70 peut faire appel, par exemple, à une mémoire tampon circulaire de profondeur t'.

Bien qu'on ait seulement décrit le contrôle de puissance au niveau du récepteur, on comprend aisément qu'il existe une autre boucle de contrôle de puissance pour laquelle la puissance d'émission du récepteur est contrôlée au niveau de l'émetteur.

**Revendications**

1. Procédé de télécommunication utilisant une consigne de puissance ayant pour but de maintenir la puissance d'un émetteur à un niveau tel que la caractéristique du signal reçu par un récepteur correspondant soit constamment égale à, ou voisine d'une référence, procédé dans lequel :

   - l'émetteur (40) transmet des informations au récepteur (44) avec une puissance fonction du signal de consigne fourni par le récepteur,
   - cette consigne étant établie à partir de la comparaison entre une caractéristique $(\hat{\gamma})$ du signal reçu et la référence $(\gamma_{ref})$

   **caractérisé en ce que**

   - un retard intervenant dans la transmission des signaux entre l'émetteur et le récepteur, on élabore la consigne de puissance dans le récepteur, à chaque réception d'information, à partir, d'une part, de ladite comparaison entre la caractéristique du signal reçu et la référence, et d'autre part, d'un signal représentant la puissance d'émission du signal reçu,

   ladite consigne est déterminée également à partir des consignes précédemment élaborées et transmises à l'émetteur mais dont ce dernier n'a pu tenir compte en raison des retards de transmission.

2. Procédé selon la revendication 1, **caractérisé en ce que** la caractéristique étant un rapport signal à bruit lissé, dans le récepteur, on détermine le rapport signal à bruit instantané $(\tilde{\gamma})$ du signal reçu, on le divise par un signal $(T_x)$ représentant la puissance d'émission du signal reçu, on lisse ce rapport et on multiplie le rapport lissé par le signal $(T_x)$ représentant la puissance d'émission du signal reçu, le résultat $(\hat{\gamma})$ de cette multiplication constituant la caractéristique qui est comparée à la référence.

3. Procédé selon la revendication 1, ou 2, **caractérisé en ce que** la mise à jour au temps t, dans le récepteur, du signal $(T_x)$ représentant la puissance d'émission du signal reçu s'effectue après l'écoulement d'un temps t' suivant l'émission d'une consigne du récepteur vers l'émetteur, ce temps t' étant égal à la somme du retard $t_p$ de transmission du récepteur vers l'émetteur, du temps $t_e$ de traitement, ou prise en compte, de la consigne dans l'émetteur et du temps $t_p$ de retard de transmission de l'émetteur vers le récepteur, et **en ce que** cette mise à jour consiste à multiplier la puissance précédemment en mémoire par la consigne émise au temps t.

4. Procédé selon l'une quelconque des revendications précédentes, **caractérisé en ce que** la consigne C(t) est élaborée à partir de la formule suivante :

$$C(t) = \frac{\gamma_{ref}}{\hat{\gamma}(t)} \cdot \frac{T_x(t)}{T_x(t + t')}$$

formule dans laquelle $\gamma_{ref}$ est la valeur de la caractéristique de référence, $\hat{\gamma}(t)$ est la valeur de la caractéristique mesurée au temps t dans le récepteur, $T_x(t)$ et $T_x(t+t')$ sont les signaux représentant la puissance d'émission du signal reçu aux temps, respectivement, t et t+t'.

**5.** Procédé selon l'une quelconque des revendications 1 à 3, **caractérisé en ce que** la consigne C(t) est élaborée à partir de la formule suivante :

$$C(t) \ = \ \frac{\gamma_{ref}}{\hat{\gamma}(t)} \quad \frac{1}{\Pi C} \cdot$$

formule dans laquelle $\gamma_{ref}$ est la valeur de la caractéristique de référence, $\hat{\gamma}(t)$ est la valeur de la caractéristique mesurée au temps t dans le récepteur et $\Pi C$ est la consigne ou le produit des consignes précédemment émise(s) mais non encore prise(s) en compte par l'émetteur.

**6.** Procédé selon l'une quelconque des revendications précédentes, **caractérisé en ce que** la consigne émise par le récepteur vers l'émetteur est émise simultanément avec des données d'information ou de signalisation.

**7.** Procédé selon la revendication 6, **caractérisé en ce que** les données transmises du récepteur vers l'émetteur se présentent sous forme de données numériques en cellules ou paquets, **en ce que** chaque consigne est émise dans l'en-tête de la cellule ou du paquet.

**8.** Procédé selon l'une quelconque des revendications précédentes, **caractérisé en ce que** les informations transmises de l'émetteur (40) vers le récepteur (44) étant des données numériques transmises par cellules ou paquets, la caractéristique du signal reçu est déterminée à chaque cellule.

**9.** Procédé selon la revendication 6, 7 ou 8, **caractérisé en ce que** le trafic d'informations de l'émetteur vers le récepteur ou du récepteur vers l'émetteur est de type sporadique.

**10.** Procédé selon l'une quelconque des revendications précédentes, **caractérisé en ce que**, l'émetteur (40) ayant aussi pour but de recevoir des informations provenant du récepteur (44) et le récepteur ayant pour but d'émettre des informations vers l'émetteur, le contrôle de la puissance d'émission du récepteur s'effectue à partir d'un signal de consigne fourni par l'émetteur.

**11.** Récepteur pour la mise en oeuvre du procédé de télécommunication selon l'une quelconque des revendications précédentes, ce récepteur (44) ayant aussi une fonction d'émission de signaux vers un émetteur, comportant des moyens (58') pour élaborer des signaux de consigne de puissance, cette consigne étant établie à partir de la comparaison entre une caractéristique d'un signal reçu par le récepteur et une référence (Yref), **caractérisé en ce que**
un retard intervenant dans la transmission des signaux entre l'émetteur et le récepteur, lesdits moyens (58') pour élaborer les signaux de consigne sont prévus pour élaborer la consigne dans le récepteur, à chaque réception d'information, à partir, d'une part, de ladite comparaison entre la caractéristique du signal reçu et la référence, et d'autre part, d'un signal représentant la puissance d'émission du signal reçu,
les moyens (58') pour élaborer les signaux de consigne sont prévus pour élaborer ladite consigne également à partir des consignes précédemment élaborées et transmises à l'émetteur mais dont ce dernier n'a pu tenir compte, en raison des retards de transmission.

**12.** Récepteur selon la revendication 11, **caractérisé en ce qu'**il comporte une mémoire circulaire (70) de profondeur t', t' étant la somme du retard $t_p$ de transmission du récepteur vers l'émetteur, du temps $t_e$ de traitement pris en compte dans l'émetteur et du temps $t_p$ de retard de transmission de l'émetteur vers le récepteur.

**13.** Application du procédé selon l'une quelconque des revendications 1 à 10, à un système de télécommunication par satellite(s) dans lequel on prévoit une station de commande (20) et une pluralité de terminaux (16, 18), les communications entre le terminal et la station de commande s'effectuant par l'intermédiaire du satellite.

**Claims**

**1.** A telecommunications method using a power guiding reference, the purpose of which is to keep the power of an emitter at a certain level so that the characteristic of the signal received by a corresponding receiver is either constantly equal to, or in the proximity of a reference characteristic, a method in which.

- the emitter (40) transmits information to the receiver (44) with a power that varies depending on the guiding reference signal provided by the receiver,
- said signal having been established based on a comparison between a characteristic ($\hat{\gamma}$) of the received signal and the reference characteristic, **characterized in that**
- because a delay occurs in the transmission of signals between the emitter and the receiver, the power guiding reference is generated within the receiver, each time information is received, based both on a comparison between the characteristic of the received signal and the reference characteristic and on a signal that represents the transmission power of the received signal, said guiding reference being determined based on the guiding references that have been previously generated and transmitted to the emitter, but which the emitter has not been able to take into account, due to the transmission delays.

2. A method according to claim 1, **characterized in that**, because the characteristic has a smoothed-down signal to noise ratio, the following occur within the receive the instantaneous signal-to-noise ratio ($\tilde{\gamma}$) is determined based on the received signal, it is divided by a signal ($T_x$) representing transmission power of the received signal, this ratio is smoothed down and then multiplied by the signal ($T_x$) representing the transmisstion power of the received signal, with the product of this multiplication constituting the characteristic that is compared to the reference characteristic.

3. A method according to claim 1 or 2, **characterized in that** the updating of the signal ($T_x$) representing the transmission power of the received signal at time t within the receiver is performed after a period of time t' has passed since the sending of a guiding reference from the receiver to the emitter, said time t' being equal of the sum of the delay $t_p$ in transmitting the data from the receiver to the emitter, the time $t_e$ used to process, or take into account, the guiding reference in the emitter, and the time $t_p$ in transmitting the data from the emitter to the receiver, and **in that** said updating consists of multiplying the power previously saved in memory by the guiding reference sent at time t.

4. A method according to any one of the preceding claims, **characterized in that** the guiding reference G(t) is generated using the following formula:

$$G(t) = \frac{\gamma_{ref}}{\hat{\gamma}(t)} \cdot \frac{T_x(t)}{T_x(t+t')}$$

in which $\gamma_{ref}$ is the value of the reference characteristic, $\hat{\gamma}(t)$ is the value of the characteristic measured at time t within the receiver, and $T_x(t)$ and $T_x(t+t')$ are the signals representing the transmission power of the received signal at the times t and t+t', respectively.

5. A method according to any one of the claims one to three, **characterized in that** the guiding reference G(t) is generated using the following formula:

$$G(t) = \frac{\gamma_{ref}}{\hat{\gamma}(t)} \cdot \frac{1}{\pi G}$$

in which $\gamma_{ref}$ is the value of the reference characteristic, $\hat{\gamma}(t)$ is the value of the characteristic measured at time t within the receiver, and $\pi C$ is a guiding reference or the product of the guiding references that were previously sent but have not yet been taken into account by the emitter.

6. A method according to any one of the preceding claims, **characterized in that** the guiding reference sent by the receiver to the emitter is sent at the same time as the information or signaling data.

7. A method according to claim 6, **characterized in that** the data sent from receiver to the emitter arrives in the form of digital data in cells or packets, and **in that** each guiding reference is sent within the header of the cell or packet.

8. A method according to any one of the preceding claims, **characterized** that because the information sent from the emitter (40) to the receiver (44) is digital data transmitted in cells or packets, the characteristic of the received signal is determined separately for each cell.

9. A method according to claim 6, 7, or 8, **characterized in that** the information traffic sent from the emitter to the receiver or from the receiver to the emitter is sporadic traffic.

10. A method according to any one of the preceding claims, **characterized in that**, because another purpose of the emitter (40) is to receive information from the receiver (44) and the purpose of the receiver is to send information to the emitter, the transmission power of the receiver is tested based on a guiding reference signal provided by the ermitter.

11. A receiver for implementing the telecommunication method of one of the preceding claims, said receiver (44) also having a function of sending signals to an emitter, including means (58') to generate power guiding reference signals, said guiding reference being generated based on comparing a characteristic of a signal received by the receiver and a reference characteristic ($\gamma_{ref}$), **characterized in that** because of the delay that occurs when transmitting signals between the emitter and the receiver, said means (58') for creating guiding reference signals are designed to generate the guiding reference within the receiver, each time information is received, based both on said comparison between the characteristic of the received signal and the reference characteristic and on a signal representing the transmission power of the received signal, the means (58') for creating the guiding reference signals are also designed to generate said guiding reference based on signals that were previously generated and transmitted to the emitter, but which the emitter has not yet been able to take into account, due to transmission delays.

12. A receiver according to claim 11, **characterized in that** it includes a circular memory (70) whose depth is t', t' being the sum of the transmission delay $t_p$ from the receiver to the emitter, the time $t_e$ it takes for the emitter to process, or take into account, the guiding reference, and the delay $t_p$ in transmitting the data from the emitter to the receiver.

13. An application of the method of one of the claims one to 10, to a satellite telecommunications system in which a control station (20) and a plurality of terminals (16, 18) are included, with the terminal and the control station communicating by satellite.

**Patentansprüche**

1. Telekommunikationsverfahren, welches einen Leistungssollwert anwendet, mit dem Ziel, die Leistung eines Emitters auf einem derartigen Niveau zu halten, dass das Merkmal des von einem entsprechenden Empfänger empfangenen Signals gleich oder ähnlich einer Referenz ist; Verfahren, in welchem:

- der Emitter (40) Daten an den Empfänger (44) überträgt, deren Leistung von dem vom Empfänger bereitgestellten Sollsignal abhängig ist,
- dieser Sollwert ausgehend vom Vergleich zwischen einem Merkmal ($\gamma$) des empfangenen Signals und der Referenz ($\gamma_{ref}$) erstellt wird, **dadurch gekennzeichnet, dass**
- man bei einer in der Übertragung der Signale zwischen dem Emitter und dem Empfänger auftretenden Verzögerung bei jedem Empfang von Daten den Leistungssollwert im Empfänger erstellt, ausgehend einerseits von dem besagten Vergleich zwischen dem Merkmal des empfangenen Signals und der Referenz, und andererseits von einem Signal, welches die Sendeleistung des empfangenen Signals darstellt,

der besagte Sollwert ebenfalls ausgehend von den zuvor erstellten und an den Emitter übertragenen Sollwerten, welche letzterer jedoch aufgrund der Übertragungsverzögerungen nicht berücksichtigen konnte, bestimmt wird.

2. Verfahren nach Anspruch 1, **dadurch gekennzeichnet, dass** man, da das Merkmal ein geglätteter Signal-Rausch-Abstand im Empfänger ist, den instantanen Signal-Rausch-Abstands ($\gamma$) des empfangenen Signals bestimmt, diesen Abstand glättet und den geglätteten Abstand mit dem Signal ($T_x$), welches die Sendeleistung des empfangenen Signals darstellt, multipliziert, und dass das Ergebnis ($\gamma$) dieser Multiplikation das Merkmal, welches mit der Referenz verglichen wird, bildet.

3. Verfahren nach Anspruch 1 oder 2, **dadurch gekennzeichnet, dass** die Aktualisierung, im Empfänger, auf die Zeit t des Signals ($T_x$), welches die Sendeleistung des empfangenen Signals darstellt, nach Ablauf einer Zeit t' nach dem Senden eines Sollwerts vom Empfänger an den Emitter erfolgt, wobei diese Zeit t' gleich der Summe der Verzögerung $t_p$ der Übertragung vom Empfänger an den Emitter ist, der Zeit $t_e$ der Verarbeitung, oder Berücksich-

tigung, des Sollwerts im Emitter und der Zeit $t_p$ der Verzögerung der Übertragung vom Emitter an den Empfänger ist, und **dadurch**, dass die Aktualisierung darin besteht, die zuvor gespeicherte Leistung mit dem zum Zeitpunkt t gesendeten Sollwert multipliziert.

4. Verfahren nach einem beliebigen der vorstehenden Ansprüche, **dadurch gekennzeichnet, dass** der Wollwert C (t) ausgehend von der folgenden Formel erstellt wird:

$$C(t) = \frac{(\gamma_{ref})}{\gamma(t)} \frac{T_x(t)}{T_x(t + t')}$$

wobei $\gamma_{ref}$ der Wert des Referenzmerkmals ist, $\gamma(t)$ der Wert des zum Zeitpunkt t im Empfänger gemessenen Merkmals ist, $T_x(t)$ und $T_x(t + t')$ die Signale sind, welche die Sendeleistung des zu den jeweiligen Zeitpunkten t und t + t' darstellen.

5. Verfahren nach einem beliebigen der Ansprüche 1 bis 3, **dadurch gekennzeichnet, dass** der Sollwert C(t) ausgehend von der folgenden Formel erstellt wird:

$$C(t) = \frac{\gamma_{ref}}{\gamma(t)} \frac{1}{\Pi C}$$

wobei $\gamma_{ref}$ der Wert des Referenzmerkmals ist, $\gamma(t)$ der Wert des zum Zeitpunkt t im Empfänger gemessenen Merkmals ist, und $\Pi C$ der zuvor gesendete Sollwert oder das Produkt der zuvor gesendeten Sollwerte, welche vom Emitter noch nicht berücksichtigt wurden, ist.

6. Verfahren nach einem beliebigen der vorstehenden Ansprüche, **dadurch gekennzeichnet, dass** der vom Empfänger an den Emitter gesendete Sollwert simultan mit den Informations- oder Signalisierugsdaten gesendet wird.

7. Verfahren nach Anspruch 6, **dadurch gekennzeichnet, dass** die vom Empfänger an den Emitter übertragenen Daten die Form von digitalisierten Daten in Zellen oder Paketen haben, und dass jeder Sollwert im Header der Zelle oder des Pakets gesendet wird.

8. Verfahren nach einem beliebigen der vorstehenden Ansprüche, **dadurch gekennzeichnet, dass** die vom Emitter (40) an den Empfänger (44) gesendeten Informationen in Zellen oder Paketen übertragene digitalisierte Daten sind, wobei das Merkmal des empfangenen Signals bei jeder Zelle bestimmt wird.

9. Verfahren nach Anspruch 6, 7 oder 8, **dadurch gekennzeichnet, dass** der Informationsverkehr vom Emitter zum Empfänger oder vom Empfänger zum Emitter von sporadischer Art ist.

10. Verfahren nach einem beliebigen der vorstehenden Ansprüche, **dadurch gekennzeichnet, dass**, da der Emitter (40) ebenfalls zur Aufgabe hat, Informationen vom Empfänger (44) zu empfangen, und der Empfänger ebenfalls zur Aufgabe hat, Informationen an den Emitter zu senden, die Steuerung der Sendeleistung des Empfängers ausgehend von einem vom Emitter bereitgestellten Sollsignal erfolgt.

11. Empfänger für das Implementieren des Telekommunikationsverfahrens nach einem beliebigen der vorstehenden Ansprüche, wobei der Empfänger (44) ebenfalls eine Signalsendefunktion an den Emitter hat, welche über Mittel (58') zur Erstellung von Leistungssollwerten verfügt, wobei dieser Sollwert ausgehend von dem Vergleich zwischen einem Merkmal eines vom Empfänger empfangenen Signals und einer Referenz (Yref) erstellt wird, **dadurch gekennzeichnet, dass** die besagten Mittel (58') zur Erstellung der Signalsollwerte bei Eintreten einer Verzögerung bei der Übertragung der Signale zwischen dem Emitter und dem Empfänger dafür vorgesehen sind, den Sollwert im Empfänger, bei jedem Empfang von Informationen, ausgehend von dem besagten Vergleich zwischen dem Merkmal des empfangenen Signals und der Referenz, einerseits, und von einem Signal, weiches die Sendeleistung des empfangenen Signals darstellt, andererseits, zu erstellen, wobei die Mittel (58') zur Erstellung der Signalsollwerte dazu bestimmt sind, den besagten Sollwert ebenfalls ausgehend von den zuvor erstellten und an den Emitter übertragenen, von diesem jedoch nicht berücksichtigten Sollwerte zu erstellen.

**12.** Empfänger nach Anspruch 11, **dadurch gekennzeichnet, dass** er einen Ringspeicher (70) mit einer Tiefe von t' umfasst, wobei t' die Summe der Verzögerung $t_p$ bei der Übertragung vom Empfänger an den Emitter, der Verarbeitungszeit $t_e$, welche im Emitter berücksichtigt wurde, und der Verzögerungszeit $t_p$ bei der Übertragung vom Emitter zum Empfänger ist.

**13.** Anwendung des Verfahrens nach einem beliebigen der Ansprüche 1 bis 10 auf ein Satelliten-Telekommunikationssystem, in welchem eine steuerstation (20) und eine Mehrzahl von Endgeräten (16, 18) vorgesehen sind, wobei die Verbindungen zwischen dem Endgerät und der Steuerstation über einen Satelliten erfolgen.

FIG.1

FIG.2

FIG.3

FIG.4

40 — $T_x$ — 42

50

48

$R_x$ — 52

$E_b/N_0$ — 54

$\tilde{\gamma}$

FILTRAGE — 56' — 72 — 70

44 — 74

$\hat{\gamma}$

DÉCISION — 76 — 74

$\gamma_{ref}$ — 60 — 58' — 46

FIG.5

| $P_e$ | 1 | 1 | 1 | $\alpha^{-1}$ | $\alpha^{-2}$ | $\alpha^{-3}$ | $\alpha^{-3}$ | $\alpha^{-5}$ | $\alpha^{-5}$ | $\alpha^{-5}$ | $\alpha^{-5}$ | $\alpha^{-9}$ | $\alpha^{-9}$ | $\alpha^{-11}$ | $\alpha^{-12}$ | $\alpha^{-13}$ |
|---|---|---|---|---|---|---|---|---|---|---|---|---|---|---|---|---|

100

102

(lignes diagonales : $\alpha$, $\alpha$, $\alpha$, $\alpha^2$, $\alpha$, $\alpha$, $\alpha$, $\alpha$, $\alpha^2$, $\alpha$, $\alpha$, $\alpha$, $\alpha$)

| t | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|

| $\gamma$ | | $\alpha$ | $\alpha^2$ | $\alpha^3$ | | $\alpha^3$ | $\alpha^3$ | $\alpha^4$ | $\alpha^3$ | $\alpha^4$ | | $\alpha^6$ | $\alpha^3$ | $\alpha^4$ | $\alpha^3$ | $\alpha^3$ |
|---|---|---|---|---|---|---|---|---|---|---|---|---|---|---|---|---|---|

| CONSIGNES C(t) | $\alpha^{-1}$ | $\alpha^{-1}$ | $\alpha^{-1}$ | 1 | $\alpha^{-2}$ | $\alpha^{-1}$ | $\alpha^{-2}$ | $\alpha^{-3}$ | $\alpha^{-4}$ | 1 | $\alpha^{-2}$ | $\alpha^{-1}$ | $\alpha^{-1}$ | $\alpha^{-1}$ | $\alpha^{-1}$ |
|---|---|---|---|---|---|---|---|---|---|---|---|---|---|---|---|---|

| $T_x$ | | 1 | 1 | 1 | $\alpha^{-1}$ | $\alpha^{-2}$ | $\alpha^{-3}$ | $\alpha^{-3}$ | $\alpha^{-5}$ | $\alpha^{-5}$ | $\alpha^{-5}$ | $\alpha^{-5}$ | $\alpha^{-9}$ | $\alpha^{-9}$ | $\alpha^{-11}$ | $\alpha^{-12}$ |
|---|---|---|---|---|---|---|---|---|---|---|---|---|---|---|---|---|---|

CONSIGNES NON REÇUES PAR L'ÉMETTEUR :

| $\alpha^{-1}$ | $\alpha^{-1}$ | $\alpha^{-1}$ | | $\alpha^{-2}$ | | | | $\alpha^{-4}$ | | | $\alpha^{-2}$ | $\alpha^{-1}$ | $\alpha^{-1}$ | $\alpha^{-1}$ |
|---|---|---|---|---|---|---|---|---|---|---|---|---|---|---|
| $\alpha^{-1}$ | $\alpha^{-1}$ | $\alpha^{-1}$ | | | $\alpha^{-2}$ | 1 | 1 | | $\alpha^{-4}$ | | | $\alpha^{-2}$ | $\alpha^{-1}$ | $\alpha^{-1}$ |

FIG.5

FIG.6

**EP 1 017 186 B1**

**Documents brevets cités dans la description**

- WO 9845962 A